# EUROPEAN PATENT SPECIFICATION

(11) **EP 4 145 094 B1**
(45) Date of publication and mention of the grant of the patent: **03.06.2026**
(21) Application number: 22191874.1
(22) Date of filing: 24.08.2022
(51) Int. Cl.: G01F 15/00, F15D 1/02, G01F 1/66

(54) **FLOW CONDITIONER FOR SEVERE FLOW DISTURBANCES**
STRÖMUNGSKONDITIONIERER FÜR STARKE STRÖMUNGSSTÖRUNGEN
CONDITIONNEUR DE DÉBIT POUR DE GRAVES PERTURBATIONS DE FLUX

(30) Priority: 03.09.2021 CN 202122119562 U; 06.06.2022 US 202217830627
(43) Date of publication of application: 08.03.2023
(73) Proprietor: Honeywell International Inc., Charlotte, NC 28202 (US)
(72) Inventor: LIU, Rui, Charlotte, 28202 (US); PENG, Wen, Charlotte, 28202 (US); LUO, Dong, Charlotte, 28202 (US); YANG, Li, Charlotte, 28202 (US)
(74) Representative: Houghton, Mark Phillip

(56) References cited:
- CN-A- 111 397 678
- CN-U- 215 524 725
- CN-U- 215 524 726
- CN-U- 216 081 636
- GB-A- 2 039 613
- US-A- 5 529 093
- US-A1- 2003 131 667
- US-A1- 2017 009 788

## Description

### CROSS-REFERENCE TO RELATED APPLICATION

This patent application claims priority to Chinese Patent Application No. 202122119562.6, entitled "Rectifier and Flowmeter," which was filed on September 3, 2021, published as Patent Application Publication No. CN216081636U on March 18, 2022.

### TECHNICAL FIELD

Embodiments are generally related to the field of fluid measurement. Embodiments further relate to the field of ultrasonic gas flow metering (UGFM), and ultrasonic gas flow meters. Embodiments also relate to flow conditioners configured for severe disturbance flow measurement performance.

### BACKGROUND

Flowmeters are utilized widely in various fields. Ultrasonic gas flowmeters, for example, can realize non-contact measurement, with the advantages of high measurement precision, wide measurement range, convenient installation and maintenance, environmental protection, and energy conservation and the like. Ultrasonic gas flowmeters are often used in flow measurement and can be conveniently connected to a current gas composition and employed for diagnostic intelligent metering, thereby meeting expected application prospects. Current ultrasonic gas low meters are sensitive to flow fields and may require the use of a long upstream straight tube to develop the flow into a symmetrical flow field curve. In addition, similar requirements may exist for other flow meters such as turbine flow meters and the like.

The field of ultrasonic gas flow metering (UGFM) can extend applications downstream due to its advantages of meters having no moving parts, nearly free maintenance, and a wide measuring range of various flow rates and turn-down ratio with respect mechanical meters, less loss of thru meter pressure, and easy linkage to future smart metering of gas composition and diagnostics.

Traditional ultrasonic gas flow meters are much sensitive, however, to flow disturbances compared to traditional mechanical meters. Thus, a long upstream straight pipe may be needed to make it possible for the flow to develop to a symmetrical flow profile, which is ideal for ultrasonic flow measurement.

The present inventors believe that a solution to the aforementioned problems lies in the design and implementation of a unique flow conditioner that can provide sufficient flow for ultrasonic measurements while also reducing the need for a very long upstream strait pipe for an ultrasonic flow meter used in severe disturbance flow conditions, such as a halfmoon condition, etc. Along these same lines, the present inventors believe that a solution to the above problems involves the implementation of an ultrasonic flow meter, which can be used in a wider variety of applications, including those with limited installation space and severe disturbance flow.

Examples of currently used systems can be found in the following documents:
US2017/009788 A1, which discloses a pipe assembly for flow measurement characterized by a fluid flow pipe and two or more flow conditioners each having a stepped configuration and disposed in series within the fluid flow pipe in an orientation substantially perpendicular to an axis of the fluid flow pipe.

CN215524726U, which discloses a rectifier comprising a fairing and a rectifier body, the core part is located in the fairing, the core part is a rotating body, the longitudinal direction is defined in the direction of the rotating shaft of the core part, the core part is provided with a head part and a tail part which are close to the two ends of the longitudinal direction respectively, and in the flowing direction of fluid flowing through the rectifier, the tail part is located on the downstream portion of the head part, and the tail part is located on the downstream portion of the tail part. The head part is provided with a flow-blocking curved surface that protrudes towards the upstream and is used for blocking fluid flowing to the core part; and the multiple fan blades are arranged between the core part and the fairing around the core part, so that fluid flowing through the multiple fan blades forms rotational flow. The utility model further relates to a flow meter comprising the rectifier.

US5529093A, which discloses a flow conditioner for use in pipelines to isolate a measuring device from the effects of piping induced disturbances thereby allowing more accurate metering of fluids flowing in pipelines. The device comprises three sections: an anti-swirl device; a settling chamber; and a profile device. The three sections are installed in a pipeline at a predetermined distance upstream from a metering device and at a minimum predetermined distance downstream from a pipeline disturbance. In the pipeline, the anti-swirl device is the furthest upstream, followed by a settling chamber of a specified length, which in turn is followed by the profile device. The anti-swirl device substantially eliminates swirl, the settling chamber minimizes interaction between the anti-swirl device and profile device. The profile plate produces pseudo-fully developed turbulent structure and velocity profile so there is a minimum deviation of the empirical discharge coefficient or meter calibration factor for both short and long piping lengths. In certain circumstances, the unique profile plates may be used without anti-swirl devices.

CN111397678 A, which discloses a multistage rectification MEMS gas flow meter, and belongs to the technical field of flow meter devices. The multistage rectification MEMS gas flow meter comprises a flow equalizing section, a mixing section, a porous straight pipe section, a transition section and a gas outlet channel which are sequentially arranged, and a downstream block is arranged between the transition section and the gas outlet channel. A central air inlet hole and side holes are formed in the flow equalizing section, a plurality of vent holes I are uniformly formed in the porous straight pipe section, and a plurality of vent holes II are uniformly formed in the downstream block. A bypass for communicating the transition section with the air outlet channel is also arranged between the transition section and the air outlet channel, is communicated with the transition section through an air inlet pipeline, and is communicated with the air outlet channel through an air outlet pipeline; a substrate sleeves the bypass, and an MEMS mass flow sensor is arranged on the substrate and located in the bypass.

US2003/131667 A1, which discloses an ultrasonic flowmeter for measuring fluid flow, that combines isolating conditioner technology with ultrasonic technology to determine flow velocity. The method and apparatus do not require the use of integration techniques or the prior determination of flow swirl or asymmetry to achieve accuracy. Wherein the discloses flowmeter also has self-diagnostic capabilities.

GB2039613A, which discloses an apparatus for silencing air blown off from a compressed-air vessel via an over-pressure-relief valve, a silencer which reduces the jet energy of the discharging air is disposed on the outlet side of the said valve. The silencer may comprise a capillary throttling device or devices with a plurality of parallel capillary ducts, which are flared at their inlet ends. Cavities may be interposed between such throttling devices disposed in series. A tubular shield adjoining the silencer at the outlet end may extend out of or be formed as part of an enclosing casing.

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the embodiments to provide for an improved flow conditioner.

It is another aspect of the embodiments to provide for an improved flow conditioner for use with a flowmeter.

It is a further aspect of the embodiments to provide for a flow conditioner having an integrated sub-assembly of shapers with a reducer located between the shapers.

It is also an aspect of the embodiments to provide for a flow conditioner having a reducer structure that includes a reduced diameter pipe with an inner diameter that gradually decreases along a direction of flow.

It is an additional aspect of the embodiments to provide for a flow conditioner in which fluid produces a retraction effect that further mixes fluid and facilitates asymmetric high-speed flow and low-speed flow in the fluid mix evenly.

The aforementioned aspects and other objectives can now be achieved as described herein. In an embodiment, a flow conditioner is provided as defined in claim 1.

In an embodiment, each of the first and second flow conditioning units includes at least one reducer.

In an embodiment, the flow conditioner can include a holding part that holds the first and second flow conditioning units and can provide the mixing space for developing the flow.

In an embodiment, the first flow conditioning unit can include two shapers with a reducer located therebetween, wherein the two shapers are associated with the first flow conditioning unit; and the second flow conditioning unit can include two shapers including a first shaper and a second shaper, with a reducer located between the first shaper and the second shaper associated with the second flow conditioning unit.

In an embodiment, the holding part can include process connection to a pipeline.

In an embodiment, the flow conditioner can further include a holding pipe with the mixing space for developing the flow, and a second process connection to a flowmeter.

In an embodiment, the shapers can be configured in a form of, for example, a honeycomb plate, a ring plate, a grid plate, or a capillary tube.

In an embodiment, the shapers can each possess a cross section that is circular or polygonal.

In an embodiment, the reducer can have a reducer structure that includes a reduced diameter pipe with an inner diameter that decreases along the direction of the flow.

In an embodiment, a flowmeter can include a flow conditioner as defined in claim 1.

In an embodiment of the flowmeter, the flow conditioner can include a holding part that holds the plurality of flow conditioning units and provides the mixing space for developing the flow.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates a side perspective view of a flow conditioner, which can be implemented in accordance with an embodiment;
FIG. 2 illustrates side view of the flow conditioner depicted in FIG. 1, in accordance with an embodiment;
FIG. 3 illustrates a front view of the flow conditioner depicted in FIG. 1 and FIG. 2, in accordance with an embodiment;
FIG. 4 illustrates a front view of the flow conditioner depicted in FIG. 1 and FIG. 2, in accordance with an embodiment;
FIG. 5 illustrates a graph depicting data indicative of a 1D 1-double hive structure performance of a halfmoon perturbation test for a flow conditioner, in accordance with an embodiment; and
FIG. 6 illustrates a graph depicting data indicative of a 3D 2-double hive structure performance for a flow conditioner, in accordance with an embodiment.

Like reference symbols or reference numerals in the various drawings indicate like elements.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in an embodiment" or "in one embodiment" or "in an example embodiment" and variations thereof as utilized herein may or may not necessarily refer to the same embodiment. Similarly, the phrase "in another embodiment" or "in another example embodiment" and variations thereof as utilized herein may or may not necessarily refer to a different embodiment.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context. The term "at least one" may refer to "one or more". For example, "at least one widget" may refer to "one or more widgets."

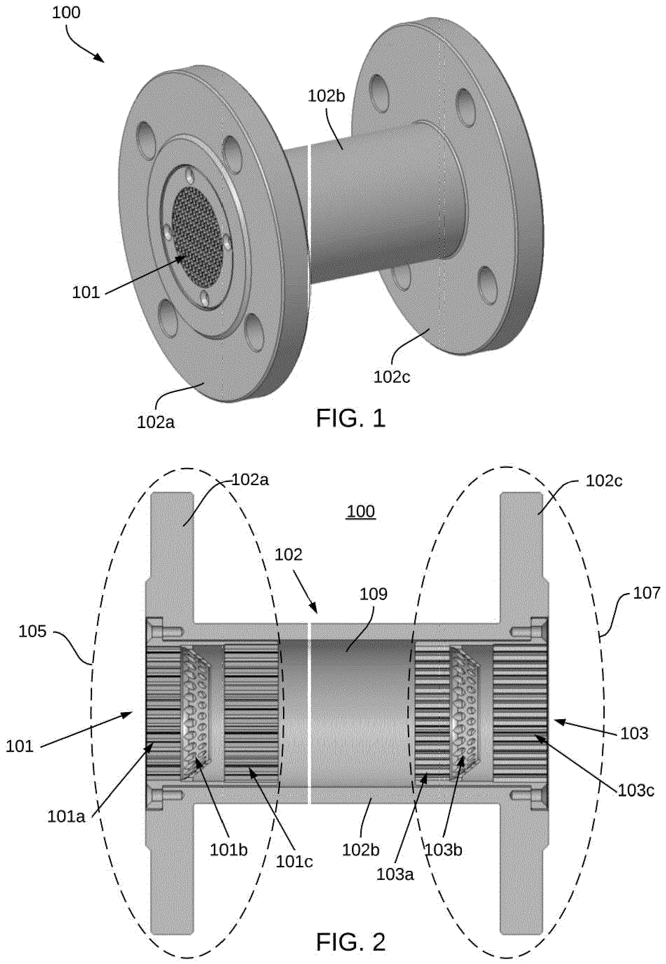

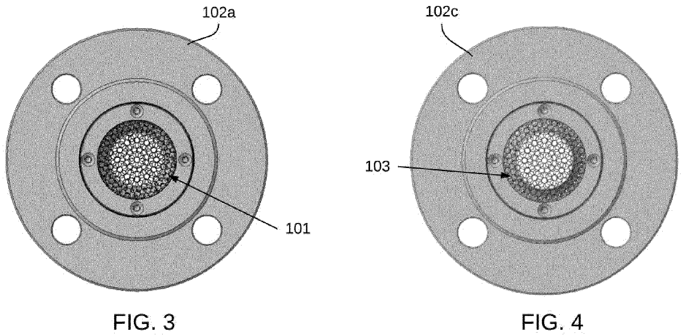

FIG. 1 illustrates a side perspective view of a flow conditioner 100, which can be implemented in accordance with an embodiment. FIG. 2 illustrates side view of the flow conditioner 100 depicted in FIG. 1. FIG. 3 illustrates a front view of the flow conditioner 100 depicted in FIG. 1 and FIG. 2. FIG. 4 illustrates a front view of the flow conditioner 100 depicted in FIG. 1 and FIG. 2.

Note that in FIGS. 1 to 4, identical reference numerals refer generally to identical or similar parts or elements. It should be appreciated that in some embodiments, the flow conditioner 100 described and illustrated herein can be adapted for use with a flowmeter. For example, the flow conditioner 100 may be used in front of a flowmeter and in some embodiments, as an internal flow conditioner. A flowmeter may include the flow conditioner 100.

As shown in FIG. 1 and FIG. 2, the flow conditioner 100 can include three parts. The first part 101 is an integrated sub-assembly of two shapers 101a, 101c with a reducer 101b located therebetween. Each shaper can be configured in the form of, for example, a honeycomb plate, a ring plate, a grid plate, a capillary tube, etc. The cross section of the shapers is circular or polygonal, but the cross-section shape and size of multiple core channels can be essentially the same.

A reducer 101b may be located in the middle. The structure of reducer 101b can be that of a reduced diameter pipe, and its inner diameter gradually decreases along the flow direction. The reducer 101b can allow the fluid to produce a retraction effect to further mix the fluid and facilitate asymmetric high-speed flow and low-speed flow in the fluid mix evenly.

A process connection of part 102a and part 102c together with a holding pipe 102b can form a second part 102 of the flow conditioner 100. The second part 102 can function as a holding part to fix the first part 101 and third part 103. The first part 101 and third part 103 can be threaded or welded to this part 102. Furthermore, the second part 102 can provide a connection to a flowmeter and a customer pipeline by a flange bolt connection or a welding. In the pipe between the first part 101 and a third part 103, a mixing space 109 can be located for flow development and to allow the flow to become more symmetrical.

The third part 103 of the flow conditioner 100 can possess the same structure as the first part 101. The third part 103 of the flow conditioner 100 can be located downstream from the holding part 102, and can include a reducer 103b, which can be similar in structure and functioning to the reducer 101b.

The first part 101 of the flow conditioner 100 can reshape the severe disturbance flow fluid first to render it with a uniform and symmetrical flow for ultrasonic measurement. In order to produce a profile more adequately, a mixing space 109 be added following the first part 101 to provide a flow developing space. The third part 103 discussed above can straighten the reshaped severe disturbance flow fluid again to produce the fluid angle and symmetrically rectify the reshaped flow profile, such that the ultrasonic measurement area may be closer to the ideal flow field, thereby greatly reducing measurement errors.

The flow conditioner 100 is implemented in a configuration that includes a first flow conditioning unit 105 and a second flow conditioning unit 107 with the mixing space 109 located between the first and second flow conditioning units. The first flow conditioning unit 105 and the second flow conditioning unit 107 are indicated in FIG. 2 by respective dashed circular lines, which denote the general regions of the of the flow condition 100 that make up the respective flow conditioning units.

In examples not encompassed by the wording of the claims, at least one of the first flow conditioning unit 105 or the second flow conditioning unit 107 can include a shaper and/or a reducer. The other of the first flow conditioning unit 105 or the second flow conditioning unit 107 can include one or more shapers. Both flow conditioning units 105 and 107 can include one or more reducers.

In the claimed flow conditioner, the first flow conditioning unit 105 includes two shapers with a reducer located there between. The holding part 102 can hold the first and second conditioning units 105 and 107, and can provide the mixing space 109 for developing the flow. The second flow conditioning unit 107 can also include two shapers with a reducer located between the two shapers (e.g., a reducer located between a first shaper and a second shaper associated with the second flow conditioning unit 107).

In an embodiment, the holding part 102 can include a process connection to a customer pipeline. The holding part 102 can also include the holding pipe 102b, for example, with the mixing space 109 for the flow, and can additionally include a second process connection to the flowmeter. As discussed previously, the shapers can be configured in a form of at least one of: a honeycomb plate, a ring plate, a grid plate, and a capillary tube. The shapers discussed herein can also each possess a cross-section that is circular or polygonal. Furthermore, the reducers discussed herein can include a reducer structure of a reduced diameter pipe with an inner diameter that decreases along a direction of the flow.

The embodiments can provide a new working solution for severe disturbance flow measurement by ultrasonic measurement. This approach does not need a long upstream pipeline for severe disturbance flow, which saves installation space, and allow for replacement of existing mechanical meters such as turbine meters. The pressure drop evidenced by the disclosed flow conditioner shows a much lower drop as compared to conventional designs.

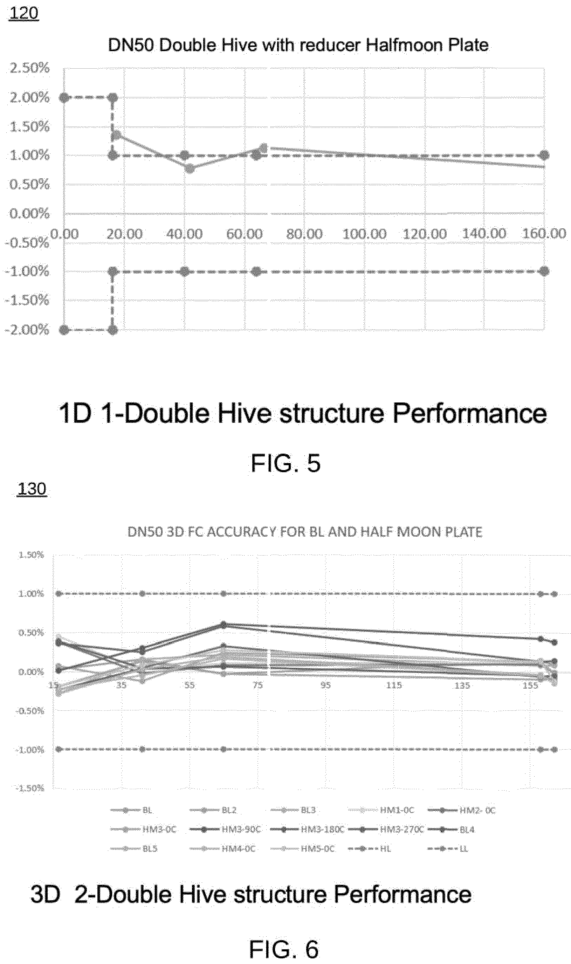

The requirement of severe disturbance flow measurement performance with short length of the upstream pipeline is becoming a "must have" option for current users. A lower pressure drop is therefore a competitive advantage of the flow conditioner 100. That is, FIG. 5 illustrates a graph 120 depicting data indicative of 1D 1-double hive structure performance. FIG. 6 illustrates a graph 130 depicting data indicative of 3D 2-double hive structure performance. These figures demonstrate that in the flow rate working area, the accuracy of halfmoon perturbation test configurations shows significant performance improvement. The accuracy improved, for example, from -1% ~ 1.4% to within ±1%.

The flow conditioner 100 can be manufactured by sheet metal stamping, laser welding, vacuum brazing, investment molding, machining or any other manufacturing process that can form the shape of the design. The flow conditioner 100 can be used in gas and liquid pipelines before some instruments or equipment that require a uniform and symmetrical flow profile for severe disturbance flow, and other occasions when needed. The flow conditioner 100 can be used in front of a flowmeter and can be used as an internal flow conditioner.

It will be appreciated that variations of the above-disclosed and other features and functions, or alternatives thereof, may be desirably combined into many other different systems or applications, without departing from the scope of the following claims.

## Claims

1. A flow conditioner (100), comprising:
a first flow conditioning unit (105), wherein the first flow conditioning unit (105) comprises:
two shapers including a first shaper (101a) and a second shaper (101c), wherein the first shaper and the second shaper of the first flow conditioning unit (105) are spaced apart from each other;
and
a reducer (101b) located between the first shaper and the second shaper;
a second flow conditioning unit (107), wherein the second flow conditioning unit (107) comprises:
two shapers including a first shaper (103a) and a second shaper (103c), wherein the first shaper and the second shaper of the second flow conditioning unit (107) are spaced apart from each other; and
a reducer (103b) located between the first shaper and the second shaper of the second flow conditioning unit (107);
a mixing space (109) located between the first and second flow conditioning units for developing a flow.

2. The flow conditioner (100) of claim 1 further comprising a holding part that holds the first and second flow conditioning units and provides the mixing space (109) for developing the flow.

3. The flow conditioner (100) of claim 2 wherein the holding part comprises a process connection to a pipeline.

4. The flow conditioner (100) of claim 2 further comprising:
a holding pipe with the mixing space (109) for developing the flow; and
a second process connection to a flowmeter.

5. The flow conditioner (100) of claim 1 wherein the two shapers associated with the first or second flow conditioning units are configured in a form of at least one of: a honeycomb plate, a ring plate, a grid plate, and a capillary tube.

6. A flowmeter comprising the flow conditioner (100) of claim 1.

7. The flowmeter of claim 6 wherein the flow conditioner comprises a holding part that holds the first and second flow conditioning units and provides the mixing space (109) for developing the flow.

## Patentansprüche

1. Strömungskonditionierer (100), umfassend:
eine erste Strömungskonditioniereinheit (105), wobei die erste Strömungskonditioniereinheit (105) Folgendes umfasst:
zwei Formgeber die einen ersten Formgeber (101a) und einen zweiten Formgeber (101c) umfassen, wobei der erste Formgeber und der zweite Formgeber der ersten Strömungskonditioniereinheit (105) voneinander beabstandet sind;
und
einen Reduzierer (101b), der zwischen dem ersten Formgeber und dem zweiten Formgeber angeordnet ist;
eine zweite Strömungskonditioniereinheit (107), wobei die zweite Strömungskonditioniereinheit (107) Folgendes umfasst:
zwei Formgeber, die einen ersten Formgeber (103a) und einen zweiten Formgeber (103c) umfassen, wobei der erste Formgeber und der zweite Formgeber der zweiten Strömungskonditioniereinheit (107) voneinander beabstandet sind; und
einen Reduzierer (103b), der zwischen dem ersten Formgeber und dem zweiten Formgeber der zweiten Strömungskonditioniereinheit (107) angeordnet ist;
einen Mischraum (109), der zwischen der ersten und der zweiten Strömungskonditioniereinheit zum Entwickeln einer Strömung angeordnet ist.

2. Strömungskonditionierer (100) nach Anspruch 1, ferner umfassend einen Halteteil, der die erste und die zweite Strömungskonditioniereinheit hält und den Mischraum (109) zum Entwickeln der Strömung bereitstellt.

3. Strömungskonditionierer (100) nach Anspruch 2, wobei der Halteteil eine Prozessverbindung zu einer Rohrleitung umfasst.

4. Strömungskonditionierer (100) nach Anspruch 2 ferner umfassend:
ein Halterohr mit dem Mischraum (109) zum Entwickeln der Strömung; und
eine zweite Prozessverbindung zu einem Strömungsmesser.

5. Strömungskonditionierer (100) nach Anspruch 1, wobei die der ersten und der zweiten Strömungskonditioniereinheit zugehörigen zwei Formgeber in einer Form von mindestens einem aus Folgendem konfiguriert sind: einer Wabenplatte, einer Ringplatte, einer Gitterplatte und einem Kapillarschlauch.

6. Strömungsmesser, umfassend den Strömungskonditionierer (100) nach Anspruch 1.

7. Strömungsmesser nach Anspruch 6, wobei der Strömungskonditionierer einen Halteteil umfasst, der die erste und die zweite Strömungskonditioniereinheit hält und den Mischraum (109) zum Entwickeln der Strömung bereitstellt.

## Revendications

1. Conditionneur d'écoulement (100), comprenant :
une première unité de conditionnement d'écoulement (105), dans lequel la première unité de conditionnement d'écoulement (105) comprend :
deux conformateurs incluant un premier conformateur (101a) et un deuxième conformateur (101c), dans lequel le premier conformateur et le deuxième conformateur de la première unité de conditionnement d'écoulement (105) sont espacés l'un de l'autre ; et
un réducteur (101b) situé entre le premier conformateur et le deuxième conformateur ;
une deuxième unité de conditionnement d'écoulement (107), dans lequel la deuxième unité de conditionnement d'écoulement (107) comprend :
deux conformateurs incluant un premier conformateur (103a) et un deuxième conformateur (103c), dans lequel le premier conformateur et le deuxième conformateur de la deuxième unité de conditionnement d'écoulement (107) sont espacés l'un de l'autre ; et
un réducteur (103b) situé entre le premier conformateur et le deuxième conformateur de la deuxième unité de conditionnement d'écoulement (107) ;
un espace de mélange (109) situé entre les première et deuxième unités de conditionnement d'écoulement pour développer un écoulement.

2. Conditionneur d'écoulement (100) selon la revendication 1 comprenant en outre une partie de maintien qui maintient les première et deuxième unités de conditionnement d'écoulement et fournit l'espace de mélange (109) pour développer l'écoulement.

3. Conditionneur d'écoulement (100) selon la revendication 2 dans lequel la partie de maintien comprend un raccordement procédé à une conduite.

4. Conditionneur d'écoulement (100) selon la revendication 2 comprenant en outre :
un tuyau de maintien avec l'espace de mélange (109) pour développer l'écoulement ; et
un deuxième raccordement procédé à un débitmètre.

5. Conditionneur d'écoulement (100) selon la revendication 1 dans lequel les deux conformateurs associés à la première ou deuxième unité de conditionnement d'écoulement sont configurés sous la forme d'au moins l'un parmi : une plaque en nid d'abeilles, une plaque annulaire, une plaque grillagée et un tube capillaire.

6. Débitmètre comprenant le conditionneur d'écoulement (100) selon la revendication 1.

7. Débitmètre selon la revendication 6 dans lequel le conditionneur d'écoulement comprend une partie de maintien qui maintient les première et deuxième unités de conditionnement d'écoulement et fournit l'espace de mélange (109) pour développer l'écoulement.
